Europäisches Patentamt

**European Patent Office**

**Office européen des brevets**

(11) Numéro de publication: **0 057 432**
**A2**

## (12) DEMANDE DE BREVET EUROPEEN

(21) Numéro de dépôt: **82100595.6**

(22) Date de dépôt: **28.01.82**

(51) Int. Cl.³: **G 01 N 29/00**

---

(30) Priorité: **03.02.81 FR 8101992**

(43) Date de publication de la demande: **11.08.82**
**Bulletin 82/32**

(84) Etats contractants désignés: **BE DE FR GB IT NL**

(71) Demandeur: **STEIN INDUSTRIE Société anonyme dite:,**
**19-21, Avenue Morane Saulnier B.P. 74,**
**F-78141 Velizy-Villacoublay (FR)**

(72) Inventeur: **Vanhuffel, René, 6, allée des Blasons,**
**F-59700 Marcq en Baroeul (FR)**

(74) Mandataire: **Weinmiller, Jürgen et al, Zeppelinstrasse 63,**
**D-8000 München 80 (DE)**

---

(54) Procédé de détection du grossissement de grain de la structure métallurgique d'une pièce en acier, et appareil pour sa mise en oeuvre.

(57) Procédé de détection du grossissement de grain de la structure métallurgique d'une pièce en acier, et appareil pour sa mise en œuvre.

Procédé de détection de grossissement de grain de la structure métallurgique d'une pièce en acier, par émission d'une onde ultrasonique en un point de la pièce, et réception et mesure de l'intensité de l'onde transmise affaiblie en un autre point de celle-ci. On émet et reçoit l'onde selon une direction comprise entre 35° et 45° par rapport à la normale à la surface de la pièce.

Procédé de détection du grossissement de grain de la structure métallurgique d'une pièce en acier, et appareil pour sa mise en oeuvre

La présente invention concerne un procédé de détection du grossissement de grain de la structure métallurgique d'une pièce en acier, par
émission d'une onde ultrasonique en un point de la pièce, et réception et
mesure de l'intensité de l'onde transmise affaiblie en un autre point de
celle-ci.

On désire vérifier la grosseur de grain de pièces en acier lorsque
celles-ci sont soumises à des traitements, notamment thermiques, susceptibles d'altérer leur structure métallurgique. En particulier, une surchauffe d'une tôle en acier peut entraîner un grossissement de grain de
sa structure, soit homogène, soit localisé dans une zone déterminée.

On a envisagé d'utiliser à cet effet des mesures par émission
d'ondes ultrasoniques longitudinales en un point de la surface d'une
pièce, et réception des ondes atténuées en un autre point de sa surface,
procédé déjà utilisé pour des mesures d'épaisseur. L'atténuation étant
de forme exponentielle en fonction de l'épaisseur, celle-ci est proportionnelle à l'atténuation exprimée en décibels. Lorsque la structure
métallurgique est à gros grains, l'atténuation est plus élevée. Toutefois, l'atténuation variant aussi avec l'épaisseur, et l'atténuation
supplémentaire due à ce grossissement des grains n'étant pas beaucoup
plus importante que celle due aux variations d'épaisseur, il est difficile de faire des mesures précises de la grosseur de grain de pièces en
acier, même en effectuant plusieurs mesures successives pour compenser
la dispersion des résultats.

La présente invention a pour but de remédier à ces difficultés, et
de procurer un procédé de détection précise et fiable par une mesure
unique du grossissement de grain de la structure métallurgique d'une
pièce en acier.

Le procédé selon l'invention est caractérisé en ce que l'on émet et
reçoit l'onde selon une direction comprise entre 35° et 45° par rapport
à la normale à la surface de la pièce.

Il répond en outre de préférence à au moins l'une des caractéristiques suivantes :

- L'on effectue l'émission à partir d'un émetteur oscillant parallèlement à la surface de la pièce, et l'on ajuste la distance entre l'émetteur et le récepteur de façon à obtenir l'écho d'intensité maximale.

- L'on effectue l'émission à l'aide d'un récepteur fixe, et la réception à l'aide d'un récepteur oscillant parallèlement à la surface de la pièce, et l'on ajuste la distance entre l'émetteur et le récepteur de façon à obtenir l'écho d'intensité maximale.

- Pour la détection du grossissement de grain sur une pièce en acier diffusant peu les ondes ultrasoniques, notamment en acier inoxydable non moulé ou en acier ferritique, on émet une onde transversale

- Pour la détection du grossissement de grain sur une pièce en acier diffusant fortement les ondes ultrasoniques, notamment en acier inoxydable moulé, on émet une onde longitudinale.

L'invention concerne aussi une application du procédé ci-dessus défini à la détection de la présence de surchauffe dans un élément métallique allongé en acier soumis à une opération de cintrage avec chauffage circonférentiel localisé, caractérisé en ce que l'on mesure l'affaiblissement d'une onde ultrasonique transversale en une zone circonférentielle de l'élément non encore soumis au chauffage, puis en ce que l'on déplace simultanément les points d'émission et de réception le long de génératrices, et en ce que l'on mesure au fur et à mesure l'affaiblissement de l'onde ultrasonique à sa réception.

De préférence, l'on effectue la mesure de l'atténuation de l'onde ultrasonique à sa réception sans réétalonnage destiné à tenir compte de la variation d'épaisseur.

L'invention s'étend en outre à un appareil pour la mise en oeuvre des procédés ci-dessus, comprenant un émetteur d'ondes ultrasoniques appliqué sur la pièce selon une direction comprise entre 35° et 45° par rapport à la normale à la surface de la pièce, et un récepteur disposé à une distance déterminée du récepteur, telle que les ondes ultrasoniques traversent les zones susceptibles d'avoir subi un grossissement de grain, et partent et arrivent selon une direction comprise entre 35° et 45° par rapport à la normale à la surface de la pièce.

Cet appareil répond en outre de préférence à au moins l'une des caractéristiques suivantes :

- L'émetteur d'ondes ou le récepteur sont reliés à un système oscillant parallèlement à la surface de la pièce.

- Pour la détection de la présence de surchauffes dans un élément métallique allongé soumis à une opération de cintrage avec chauffage circonférentiel localisé, il comprend un émetteur d'ondes ultrasoniques appliqué sur l'élément métallique allongé et émettant selon une direction comprise entre 35° et 45° par rapport à la surface de l'élément, un récepteur disposé à une distance déterminée du récepteur, telle que les ondes ultrasoniques traversent les zones susceptibles d'avoir subi une surchauffe et lui parviennent selon une direction comprise entre 35° et 45° par rapport à la normale à la surface de l'élément, et des moyens pour déplacer parallèlement émetteur et récepteur le long de l'élément.

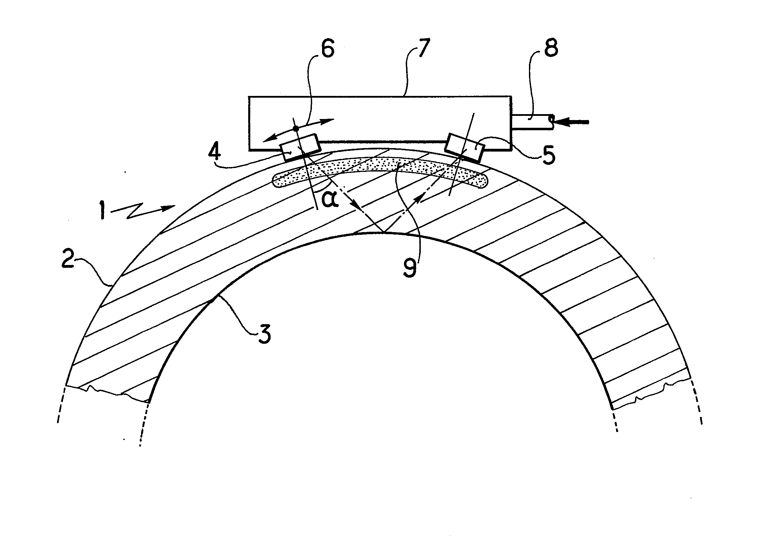

Il est décrit ci-après, à titre d'exemple et en référence à la figure unique du dessin annexé, un appareil de détection de la présence de surchauffe dans un tube en acier soumis à une opération de cintrage avec chauffage circonférentiel à l'aide d'un collier inducteur, notamment selon le procédé qui a fait l'objet de la demande de brevet européen antérieure 81 105 933.6.

Le tube métallique 1, représenté en coupe transversale, comporte une face externe 2 et une face interne 3. L'appareil de détection est disposé sur la face externe du tube. Il comprend un émetteur ultrasonique 4 et un récepteur 5. L'émetteur 4 émet dans une direction faisant un angle $\alpha$ compris entre 35° et 45° avec la normale à la surface externe du tube au point de contact. Il est solidaire d'un système oscillant mobile représenté schématiquement par la double flèche 6. L'on fait varier l'entr'axe de l'émetteur et du récepteur grâce au système oscillant de façon à obtenir l'amplitude maximale de l'onde réfléchie sur la paroi interne du tube et arrivant sur le récepteur 5 sous le même angle $\alpha$.

Afin d'assurer une bonne transmission des vibrations de l'émetteur au tube, l'émetteur est relié à la surface du tube par un matériau couplant liquide ou pâteux. Ici, émetteur et récepteur sont reliés à une enceinte 7 alimentée en eau sous pression par un conduit 8, l'eau s'écoulant sur la surface externe du tube autour de l'émetteur et du récepteur améliorant leur couplage avec le tube. Une zone de surchauffe, dans laquelle les grains sont plus gros que dans le reste de l'épaisseur du tube, est représentée schématiquement en 9.

Pour la détection, il convient naturellement en premier lieu d'étalonner l'appareil en effectuant une mesure sur une partie du tube non encore chauffée. L'amplitude de l'écho sur le récepteur est notée pour un parcours donné de l'onde ultrasonique (ou une épaisseur donnée du tube si les angles d'incidence et de réflexion sont constants).

Pour la détection de zones de surchauffe, on déplace l'ensemble émetteur-récepteur le long de deux génératrices parallèles, en maintenant à peu près constant l'entr'axe entre émetteur et récepteur. Pour chaque mesure d'atténuation, on recherche l'amplitude maximale de l'écho en ajustant l'entr'axe. On note ainsi la variation d'amplitude en décibels. Il est possible pratiquement de mesurer des atténuations de plus de 30 décibels.

Lorsque l'épaisseur du tube varie, il convient en principe de corriger l'amplitude de l'écho en réétalonnant. Toutefois, pour de faibles variations d'épaisseur du métal non chauffé, la variation d'atténuation est faible (moins de 1dB pour une variation d'épaisseur de 35 à 40mm), l'atténuation étant beaucoup plus sensible à la variation de la structure métallurgique qu'à la longueur de parcours de l'onde ultrasonique. De ce fait, pour des épaisseurs de tube variant de $\pm$ 15%, l'étalonnage en bout de tube suffit en pratique, compte tenu qu'une atténuation de 1dB est à la limite de sensibilité de l'appareil.

Bien que l'appareil de détection qui vient d'être décrit en référence à la figure du dessin paraisse la forme de réalisation préférable de l'invention, on comprendra que diverses modifications peuvent lui être apportées sans sortir du cadre de l'invention, certains de ses organes pouvant être remplacés par d'autres qui joueraient un rôle technique analogue.

En particulier, le système oscillant peut être couplé au récepteur, et non plus à l'émetteur. On peut lorsque la pièce à examiner est autre qu'un tube, disposer le récepteur sur son autre face, de façon à détecter directement l'onde ayant traversé la pièce, sans réflexion.

REVENDICATIONS

1/ Procédé de détection de grossissement de grain de la structure métallurgique d'une pièce en acier, par émission d'une onde ultrasonique en un point de la pièce, et réception et mesure de l'intensité de l'onde transmise affaiblie en un autre point de celle-ci, caractérisé en ce que l'on émet et reçoit l'onde selon une direction comprise entre 35° et 45° par rapport à la normale à la surface de la pièce.

2/ Procédé selon la revendication 1, caractérisé en ce que l'on effectue l'émission à partir d'un émetteur oscillant, et en ce que l'on ajuste la distance entre l'émetteur et le récepteur de façon à obtenir l'écho d'intensité maximale.

3/ Procédé selon la revendication 1, caractérisé en ce que l'on effectue l'émission à l'aide d'un récepteur fixe, et la réception à l'aide d'un récepteur oscillant, et en ce que l'on ajuste la distance entre l'émetteur et le récepteur de façon à obtenir l'écho d'intensité maximale.

4/ Procédé selon l'une des revendications 1 à 3, pour la détection sur une pièce en acier diffusant peu les ondes ultrasoniques, caractérisé en ce que l'on émet une onde transversale.

5/ Procédé selon l'une des revendications 1 à 3, pour la détection sur une pièce en acier diffusant fortement les ondes ultrasoniques, caractérisé en ce que l'on émet une onde longitudinale.

6/ Procédé selon l'une des revendications 1 à 5, en vue de la détermination de la présence de surchauffes dans un élément métallique allongé soumis à une opération de cintrage avec chauffage circonférentiel localisé, caractérisé en ce que l'on mesure l'affaiblissement d'une onde ultrasonique en une zone circonférentielle de l'élément non encore soumis au chauffage, en ce que l'on déplace simultanément les points d'émission et de réception le long de génératrices, et en ce que l'on mesure au fur et à mesure l'affaiblissement de l'onde ultrasonique à sa réception.

7/ Procédé selon la revendication 6, dans lequel l'opération de cintrage n'entraîne pas de variation importante d'épaisseur, caractérisé en ce que l'on effectue la mesure de l'affaiblissement de l'onde ultrasonique à sa réception sans réétalonnage destiné à tenir compte de la variation d'épaisseur.

0057432

8/ Appareil pour la mise en oeuvre du procédé selon l'une des revendications 1 à 7, caractérisé en ce qu'il comprend un émetteur d'ondes ultrasoniques (4) appliqué sur la pièce selon une direction comprise entre 35° et 45° par rapport à la normale à la surface de la pièce, et un récepteur (5) disposé à une distance déterminée du récepteur, telle que les ondes ultrasoniques traversent les zones susceptibles d'avoir subi un grossissement de grain, et partent et arrivent selon une direction comprise entre 35° et 45° par rapport à la normale à la surface de la pièce.

9/ Appareil selon la revendication 8, caractérisé en ce que l'émetteur d'ondes ou le récepteur sont reliés à un système oscillant.

10/ Appareil selon l'une des revendications 8 ou 9, pour la détermination de la présence de surchauffes dans un élément métallique allongé/soumis à en acier une opération de cintrage avec chauffage circonférentiel localisé, caractérisé en ce qu'il comprend un émetteur d'ondes ultrasoniques (4) appliqué sur l'élément métallique allongé, émettant selon une direction comprise entre 35° et 45° par rapport à la surface de l'élément, un récepteur (5) disposé à une distance déterminée du récepteur, telle que les ondes ultrasoniques traversent les zones susceptibles d'avoir subi une surchauffe et lui parviennent selon une direction comprise entre 35° et 45° par rapport à la normale à la surface de l'élément, et des moyens pour déplacer parallèlement émetteur et récepteur le long de l'élément.